# EUROPEAN PATENT SPECIFICATION

(11) **EP 0 583 304 B1**
(45) Date of publication and mention of the grant of the patent: **12.08.1998**
(21) Application number: 92909506.5
(22) Date of filing: 29.04.1992
(51) Int. Cl.: H04B 10/152

(54) **METHOD AND ARRANGEMENT TO CONVERT AN OPTICAL DATA SIGNAL FROM A MULTIMODE FIBRE TO A CORRESPONDING SIGNAL INTO A SINGLE MODE FIBRE**
VERFAHREN UND EINRICHTUNG ZUR UMWANDLUNG EINES OPTISCHEN DATASIGNALS VON EINER MULTIMODEN FASER ZU EINEM ENTSPRECHENDEN SIGNAL IN EINER MONOMODEN FASER
METHODE ET MONTAGE PERMETTANT DE CONVERTIR LE SIGNAL DE DONNEES OPTIQUE D'UNE FIBRE MULTIMODE EN UN SIGNAL CORRESPONDANT D'UNE FIBRE MONOMODE

(30) Priority: 08.05.1991 SE 9101397
(43) Date of publication of application: 23.02.1994
(73) Proprietor: FOGIM HB, S-117 65 Stockholm (SE)
(72) Inventor: FORSBERG, Gunnar, S., S-117 65 Stockholm (SE)
(74) Representative: Bjellman, Lennart Olov Henrik
(86) International application number: PCT/SE92/00285
(87) International publication number: WO 92/20172

(56) References cited:
- US-A- 4 257 125
- US-A- 4 864 649

## Description

### TECHNICAL FIELD

The present invention relates to a method and a device to convert an optical data signal from a multi mode fibre to a corresponding signal which is transmitted further into a single mode fibre by means of a laser. It is more specifically a question of converting the incoming signal into electric signals which in turn are converted into an optical output signal. The incoming signal is supposed to be generated by a so called light emitting diode meaning that it is optically incoherent. The outgoing signal is assumed to origin from a laser. Besides that the incoming optical data signal is comprising "ones" (high optical level) and "zeros" (a lower optical level) it may contain interruptions (a further lower optical level) and a superimposed low frequency signal.

### STATE OF THE ART

It has since many years been known that an incoming optical data signal may be recreated to an outgoing rather similar signal by having said signal going through a so called fibre optical regenerator converting the incoming optical signal into electric signals, which in turn are converted into an optical output signal. Provided that the type of incoming optical signal is known, i.e. such parameters as bit rate, encoding, etc are known, it will be possible to design an arrangement which recreates the incoming optical signal into a corresponding optical output signal. The drawback of such an arrangement is that if the optical input signal is different from the signal for which the arrangement was designed, it is likely that the conversion does not work. Further there is no such arrangement known which manages, with the exception of the data signal, to transfer a superimposed low frequency signal and optical interruptions.

It should be noted that there are so called fibre optical amplifiers which, without electric intermediary steps, may recreate an arbitrary optical input signal. Thus these fibre optical amplifiers require that the incoming optical signal is coherent which is not the prerequisite of the present technical field.

The U.S. Patent Application No. 4,864,649 relates to transmission by means of a laser of a data signal and a superimposed low frequency signal and deals specificially with interruptions of the data signal and hereby incorporated as a reference.

### DESCRIPTION OF THE INVENTION

The technical problem of the present case is, without detailed knowledge of the type of optical signal, to be able to transfer a normal digital optical data signal, which additionally may contain optical interruptions and as well as a superimposed low frequency signal.

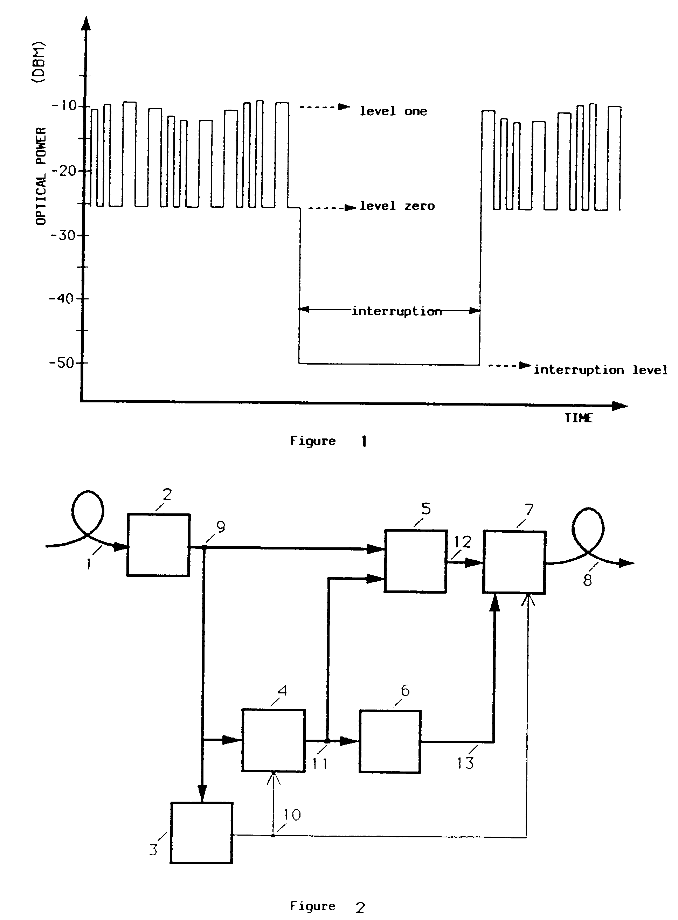

Figure 1 demonstrates an example of such an optical signal. Note that the vertical scale is graded in dBm (dB related to 1 mW) to better manifest what a so called optical interruption implies. The figure 1 out of practical reasons is produced not fully according to scale. If for example the data rate is 10 Mbit/s the superimposed low frequency signal may be only of the order 5 Khz, i.e., several orders of magnitude less that the data rate, which is not obvious from figure 1. The optical interruption may typically vary from a few hundred µs to several seconds.

In optical systems making use of interruptions, e.g., fibre optical network versions of Token ring, Ethernet or Token bus, there are requirements that the optical power level, during the interruption, should be very low, e.g., less than - 40 dBm. Conventional laser transmitters are not able to transfer such interruptions as a laser transmitter is normally biased to its so called laser threshold, which may typically be at - 25 dBm, i.e. in power about 30 times (15 dB) higher than an interruption. The present invention contains a laser transmitter which settles this.

The solution of the problem disclosed by the present invention is characterized as is indicated in the attached claims.

The most essential advantage of the invention is that it by simple means may transfer a, in advance unknown, type of normal digital optical data signal which additionally my contain optical interruptions and also a superimposed low frequency signal.

### DESCRIPTION OF THE DRAWINGS

- Figure 1: demonstrates an example of optical input signal and optical output signal of the arrangement according to the invention,
- Figure 2: demonstrates an arrangement according to the invention i form of a block diagram,
- Figure 3: demonstrates an embodiment of a low pass filter 4 according to Figure 2,
- Figure 4: demonstrates an embodiment of resistance 14 according to Figure 3,
- Figure 5: demonstrates an embodiment of a laser transmitter 7 according to Figure 2,
- Figure 6: demonstrates an embodiment of an integrator 25 according to Figure 5.

### PREFERRED EMBODIMENTS

Figure 2 demonstrates an arrangement according to the invention in form of a block diagram. An optical input signal is arriving through an optical fibre 1. The optical signal from the fibre 1 is transferred to a DC-coupled receiver 2 transforming the optical signal into a proportional electric signal available at node 9. The DC-coupling of the receiver signifies that the signal average of the electric signal is directly proportional to the optical average power.

The output signal from the receiver 2 is connected to an interruption detector 3 having a given preset interruption detection delay. Before the interruption detector 3 will be more precisely described, the signal shown in Figure 1 must be further discussed than was done above. Notice that, if the superimposed low frequency signal is disregarded, the optical input signal in Figure 1 has three levels which we may call: "level one", "level zero" and "interruption level" (see Figure 1). Level "one" corresponds to the highest optical level and level "zero" is typically 10 - 20 dB (10 - 100 times) below the level "one" and the interruption level is typically 30 - 40 dB below level "one".

Also notice that in technical specifications of optical data signals only the proportion between "level one" and "level zero" is specified to be greater than a particular quantity in dB and the same is valid for the proportion between "level one" and the "interruption level". Therefore there is no interest of transferring the optical levels exactly as those happen to exist in the input signal, but it is sufficient if the difference in levels is sufficiently large. To detect the interruption level by measurement of the level as such is also no good solution as there is in reality no guarantee that "level zero" is higher than the "interruption level" even if in most cases it is. The only way to certainly know that a real so called interruption is present is thus to measure the time when the signal is not at "level one", as all data signals do have a longest possible length of "level zero". The interruption detector 3 therefore primarily detects only "level one" or not "level one".

Thus the interruption detection delay means that normal stops (depending on a number of "zeros" in the data signal) always are shorter that the preset interruption detection delay. This delay is necessary to have the laser not fully cut off at every optical "zero". The interruption detector 3 has an output signal which may stay in either of two logical states which we may call "freeze" and "non-freeze". When the interruption detector 3 detects an interruption (after the delay) the output changes to the state "freeze". As soon as the interruption is over it changes, after an arbitrary short delay, to the state "non-freeze". One embodiment of the interruption detector 3 has, seen from outside, an adjustable interruption detection delay. The benefit of this arrangement is that the user of the device according to the invention may interface the device to different types of optical input signals.

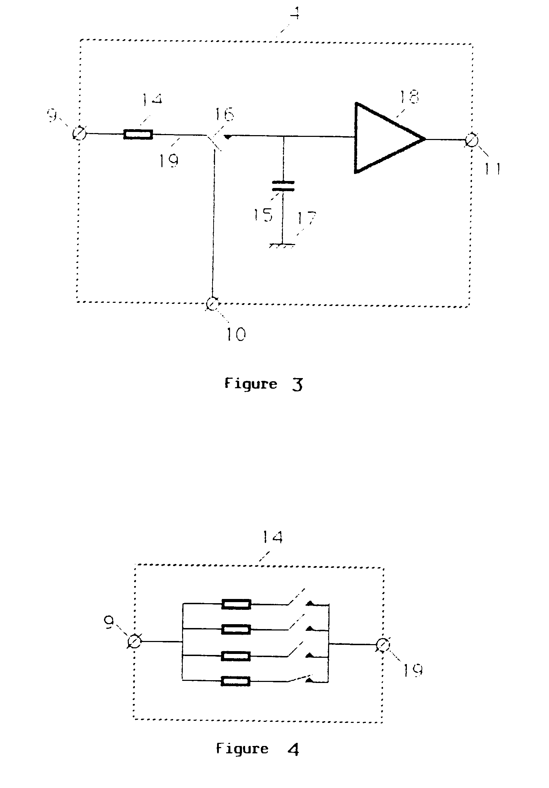

The low pass filter 4 filters the low frequency of the signal from the receiver 2. The low pass filter 4 has a sufficiently high upper frequency such that possibly superimposed low frequency signals will be passed. At the same time the cut-off frequency must be sufficiently low such that its output may be used as a decision threshold for a comparator 5. The low pass filter 4 also has a logic input signal from the interruption detector 3. If this logic input signal changes over to the state "freeze" the low pass filter immediately starts operating as an analogue memory, i.e. the output of the low pass filter keeps the analogue value it had at its output immediately before the state "freeze" was initiated. Note that the expression "analogue memory" by necessity does not imply that the analogue memory consists of analogue components. What is referred to is that an analogue signal value is kept in a memory which in principle also may contain digital components. When the logic state is changed from "freeze" into "non-freeze" the low pass filter again immediately starts operating as an ordinary low pass filter. An embodiment of the low pass filter is demonstrated in Figure 3. An analogue switch 16 is closed in the state "non-freeze" and opened in the state "freeze". The real low pass filter consists of a resistance 14 and a capacitance 15 connected to signal ground 17. When the switch is closed a normal one pole low pass filter is achieved and buffered by a high impedance amplifier 18 having typically unity gain. In the state "freeze" the analogue switch is opened and the analogue value before the state of "freeze" will be stored in the capacitor 15. Due to the amplifier having high impedance the analogue value may persist for a long period of time. Note that the analogue switch 16 preferably is of an electronic type, e.g., a DMOS transistor. An embodiment of a resistance 14 is demonstrated in Figure 4. The resistance 14 consists of a number of resistors which may be combined by means of analogue switches, which may be of a type mechanical or electronic. The resulting value of resistance between node 9 and node 19 may in such a way be varied within wide limits implying that the cut-off frequency of the low pass filter may be varied, which is advantageous if the device according to the invention has to be interfaced to different types of optical input signals.

The comparator 5 is a so called decision circuitry, the task of which is to compare its two input signals and decide which input signal is the largest and thereby control its output signal such that it presents a high or a low output level dependent on which input signal is the largest. At an interruption of the optical input signal the first upper input signal to the comparator 5 gets the value zero or very close to zero, while the second lower input signal, as previously shown, keeps the value present before the interruption. When the signal then comes back the second lower input signal immediately has the correct level thanks to the low pass filter acting as an analogue memory for the signal before "freeze". When there is a normal input signal having about equal amounts of ones and zeros and no interruptions, the second lower input signal from the low pass filter will be approximately middle to the extreme values of the signal from the receiver 2, where one extreme corresponds to optical "one" and the other extreme corresponds to optical "zero". This is what is sought and a condition for the device according to Figure 2 to operate well is that, seen under a long period of time (within which interruptions are not counted) compared to the time constant of the low pass filter, the numbers of "ones" and "zeros" are approximately equal.

An AGC circuitry 6 is an amplifier having a very slow (order of Hz) gain control, which slowly controls its gain such that the average value of the output signal is constant. The value of the output signal in turn determines the optical output power from the laser, i.e. the output signal from the AGC circuitry 6 constitutes a so called set point for the control loop of the laser transmitter. The reason for the existence of the AGC circuitry is that is desirably that the laser has the same output power level independent of the optical input power level. The optical input power level may, if different installations are compared, vary by more that 10 dB dependent on the fibre attenuation and the number of optical terminals and the like. For a given installation the optical input power level is fairly constant if it is disregarded that the power decreases at interruptions. Due to the analogue memory function of the low pass filter 4, the gain of the AGC circuitry 6 will not be affected at an interruption.

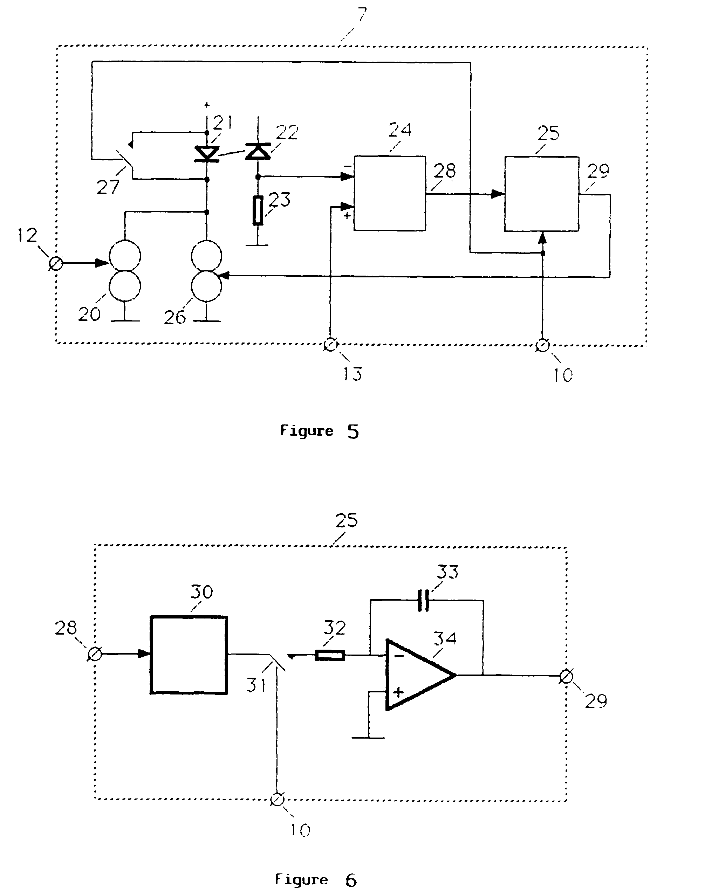

A laser transmitter 7 has three input signals being first the signal from the comparator 5, second the signal from the AGC circuitry and finally the logical signal from the interruption detector 6. The optical output signal from the laser transmitter is coupled into a fibre 8. The signal from the comparator 5 modulates the laser by a high frequency data signal. The signal from the AGC circuitry 6 constitutes the set point for the control loop of the laser transmitter. Similar to most conventional laser transmitters for fibre optics, also this laser transmitter has a control loop for the average power. What in reality is controlled in this and most other laser transmitters is the light power incident on a so called monitor diode being a photodiode positioned in proximity of the laser. As the light being coupled into the fibre 8 is proportional to the light incident on the monitor diode it may be stated that the optical output signal into the fibre is controlled. Contradictory to most conventional laser transmitters, the set point constitutes, compared to the data signal, a slowly varying signal. This signal has been passing the low pass filter 4 and the AGC circuitry 6. The reason of the set value varying in time is a wish to be able to transfer a superimpsed low frequency signal. Provided that the low pass filter 4 has a sufficiently large bandwidth to pass the superimposed low frequency signal from the receiver 2 the average of the signal at node 13 will have a superimposed low frequency signal which initially was present in the optical input signal according to the example in Figure 1. To have the device according to the invention to work in the intended way it is important that the control loop of the laser transmitter is having a sufficiently lange bandwidth to be able to transfer the superimposed low frequency signal. As the logic signal at node 10 changes from the state "non-freeze" to the state "freeze" two things happen simultaneously at the laser transmitter. First the laser current is diverted, e. g., by a switch shorting out the laser diode, such that the optical output power into the fibre goes to the so called interruption level described previously, and secondly the control loop of the laser transmitter is simultaneously "frozen" such that the analogue value controlling the average power of the laser is kept in an analogue memory. Note that the expression "analogue memory" not necessary means that the analogue memory consists of analogue components. What is referred to is that an analogue signal value may be kept in a memory which in principle also may contain digital components. When the logic signal at node 10 returns to the state "non-freeze" again two things happen simultaneously. First the diversion of the laser current is discontinued and secondly the "freezing" of the control loop of the laser is discontinued, i.e. it continues as usual having the analogue value from the analogue memory as starting point. Thanks to the analogue memory function the laser transmitter operates immediately after the interruption. Without the analogue memory value it would have taken a long time for the control loop of the laser to regulate in to its normal value. An embodiment of the laser transmitter is demonstrated in Figure 5. If we suppose a large optical signal from the fibre 1 is giving a certain logic level at node 12, the signal at node 12 will cause a current generator 20 to supply a current which we may denote I₁. At low optical signal in the fibre 1 the level at node 12 shifts, which in turn decreases the current from the current generator 20 to a current I₀, being less than I₁. The difference current I₁ - I₀ forms the peak-to-peak value of the high frequency modulation current passing a laser diode 21. It is important that the current difference I₁ - I₀ is sufficiently large to drive the laser diode from one optical level below or at the laser threshold ("level zero") to the high optical level corresponding to a so called optical "one" ("level one"). Note that the plus sign above the laser diode 21 only symbolize that the laser is forward biased, i.e., that the anode is positive relative to the cathode. Also notice that the connection of the fibre 8 to the laser diode is not drawn in Figure 5 from technical drawing reasons. The laser diode has two mirrors emitting light, from which the light from one mirror is coupled to a monitor diode 22 and the light from the other mirror is coupled to the fibre 8. The light impinging on the monitor diode 22 generates a current which is proportional to the level of light. This current generates a signal proportional to the current by means of a block 23 which, e.g., may be a simple resistor. This signal is connected to the negative input terminal of a differential amplifier 24, which also at its positive input terminal, node 13, receives the set point the control loop. The differential amplifier at its output produces the difference signal between the inputs, i.e., the signal at the positive input minus the signal at the negative input. The output signal from the differential amplifier 24 is connected to an integrator 25, which, except true integration, also gives a certain gain which we may denote A. The bandwidth of the control loop is directly proportional to the gain factor A according to classic control theory. The output signal from the integrator 25 acts on a current generator 26 and when the current increases the optical power into the fibre 8 also increases. It should be noted that all which so far here has been stated about this embodiment of the laser transmitter is known in the art and was only added as a background for the rest of the description of the embodiment of the laser transmitter 7. As node 10 changes to state "freeze" the integrator 25 keeps its analogue output signal which it had just before the state "freeze" occurred. Exactly simultaneously a switch 27 shorts out the laser diode 21 such that no or almost no current passes the laser diode. The switch 27 is an electronic switch, e.g., in form of a DMOS transistor. When node 10 returns to the state "non-freeze" the integrator 25 stops acting as an analogue memory and carries on simultaneously as the shorting of the laser diode ceases. Due to this method the laser diode may at once at the change from the state "freeze" to the state "non-freeze" supply the correct optical output power without having to wait for the slow building-up of the laser control loop. An embodiment of the integrator 25 is demonstrated in Figure 6. An amplifier 30 amplifies and inverts the signal from node 28. An operational amplifier 34, a resistor 32 and a capacitor 33 forms a classic inverting integrator. As input 10 changes to the state "freeze" a switch 31 is opened, which implies that the analogue value is stored at the output of the operational amplifier 34, provided that the operational amplifier 34 has high impedance inputs. The switch 31 is an electronically designed analogue switch. I an embodiment of the amplifier 30 the user may, from the outside, vary the gain in turn rendering that the bandwidth of the control loop may be varied, which is advantageous if the device according to the invention has to be interfaced to different types of optical input signals.

## Claims

1. A method for conversion of an incoherent optical data signal from a multi mode fibre (1), which except normal data signals may contain interruptions and an superimposed low frequency signal, to a corresponding signal further transmitted into a single mode fibre (8) by means of a laser transmitter (7),
**characterized by the steps of**
outputting a first electric signal portion from a DC coupled optical receiver (2), in part to a first input of a decision circuitry in form of a comparator (5) the output signal of which modulating the laser transmitter (7), and in part to a low pass filter (4), a first output signal portion from the low pass filter being inputted to a second input of the comparator (5),
outputting a second signal portion from the low pass filter (4) to the laser transmitter (7) through a slow AGC circuitry (6),
ouputting a second electric signal portion from the DC coupled optical receiver (2) to an interruption detector (3) by which, upon detection of an optical interruption, the low pass filter (4) is influenced such that its output signal is stored in a memory device as an analogue value, the laser transmitter (7) is influenced by diversion of the laser current such that current does not pass through the laser transmitter and an analogue value in a control loop of the laser transmitter is being stored, whereby upon ending of the interruption both the laser transmitter (7) and the low pass filter (4) continue to operate as before on the basis of their previously stored analogue values, simultaneously as the diversion of the laser current stops.

2. A device for conversion of an incoherent optical data signal from a multi mode fibre (1), which except normal data signals may contain interruptions and an superimposed low frequency signal, to a corresponding signal further transmitted into a single mode fibre (8) by means of a laser transmitter (7),
**characterized by**
a DC coupled optical receiver (2),
a low pass filter (4),
a decision circuitry in form of a comparator (5) having an output modulating the laser transmitter (7), whereby an electric signal from the DC coupled optical receiver (2) is connected partly to a first input of the decision circuitry and partly to the low pass filter (4) which output signal in part is connected to a second input of the decision circuitry and in part connected to the laser transmitter (7),
a slow AGC circuitry (6) through which the output signal of the low pass filter (4) is connected to the laser transmitter (7),
a first and second memory device,
an interruption detector (3) to which the output signal of the DC coupled optical receiver (2) is connected and which upon detection of an optical interruption influences the low pass filter (4) such that its output signal becomes stored in the first memory device as an analogue value and influences the laser transmitter (7) by diversion of the laser current such that current does not pass through the laser transmitter and the analogue value of the control loop of the laser transmitter is stored in the second memory device as an analogue value,
and means adapted to, upon ending of the interruption, continue operation of both the laser transmitter (7) and the low pass filter (4) on the basis of their previously stored analogue values and to simultaneously stop the diversion of the laser (21) current.

3. The device according to claim 2, **characterized in** that the interruption detector (3) has a given preset interruption detection delay.

4. The device according to claim 2, **characterized in** that the interruption detector (3) has a delay adjustable by the user.

5. The device according to claim 3 or 4, **characterized in** that the low pass filter (4) is a conventional one pole RC filter having an analogue switch (16) i series with a resistance (14) and a high impedance amplifier (18) buffering the filter.

6. The device according to claim 5, **characterized in** that the control loop of the laser transmitter (7) has a bandwidth adjustable by the user.

7. The device according to claim 6, **characterized in** that the laser transmitter (7) comprises an integrator (25) consisting of an amplifier (30), an operational amplifier (34) having a capacitance (33) between the negative input and the output, and a resistance (32) connected in series with an analogue switch (31) to the negative input, the positive input being connected to a reference voltage.

## Patentansprüche

1. Verfahren zur Umwandlung eines inkohärenten optischen Datensignals von einer Mehrmodenfaser (1), das neben normalen Datensignalen Unterbrechungen und ein überlagertes niederfrequentes Signal aufweisen kann, in ein entsprechendes Signal, das mittels eines Sendelasers (7) in eine Einmodenfaser (8) weitergesendet wird,
**gekennzeichnet durch die Schritte**
Ausgeben eines ersten Anteils eines elektrischen Signals von einem gleichstromgekoppelten optischen Empfänger (2), teilweise an einen ersten Eingang einer Entscheidungsschaltung in Form eines Komparators (5), dessen Ausgangssignal den Sendelaser (7) moduliert, und teilweise an ein Low-Pass-Filter (4), wobei ein erster Anteil des Ausgangssignals von dem Low-Pass-Filter auf einen zweiten Eingang des Komparators (5) gegeben wird,
Ausgeben eines zweiten Anteils des Signals von dem Low-Pass-Filter (4) über eine langsame automatische Verstärkungsregelungsschaltung (AGC-Schaltung) (6) an den Sendelaser (7),
Ausgeben eines zweiten Anteils des elektrischen Signals von dem gleichstromgekoppelten optischen Empfänger (2) an einen Unterbrechungsdetektor (3), von dem auf das Feststellen einer optischen Unterbrechung hin das Low-Pass-Filter (4) derart beeinflußt wird, daß sein Ausgangssignal als analoger Wert in einer Speichereinrichtung gespeichert wird, sowie der Sendelaser (7) durch Umleitung des Laserstroms derart beeinflußt wird, daß kein Strom durch den Sendelaser fließt und ein analoger Wert in einer Regelschleife des Sendelasers gespeichert wird, wobei auf das Enden der Unterbrechung hin sowohl der Sendelaser (7) als auch das Low-Pass-Filter (4) auf der Basis ihrer vorher gespeicherten analogen Werte wie zuvor weiterarbeiten und zwar gleichzeitig wie die Umleitung des Laserstroms endet.

2. Vorrichtung für die Umwandlung eines inkohärenten optischen Datensignals von einer Mehrmodenfaser (1), das neben normalen Datensignalen Unterbrechungen und ein überlagertes niederfrequentes Signal aufweisen kann, in ein entsprechendes Signal, das mittels eines Sendelasers (7) in eine Einmodenfaser (8) weitergesendet wird,
**gekennzeichnet durch**
einen gleichstromgekoppelten optischen Empfänger (2),
ein Low-Pass-Filter (4),
eine Entscheidungsschaltung in Form eines Komparators (5) mit einem Ausgang, der den Sendelaser (7) moduliert, wobei ein elektrisches Signal von dem gleichstromgekoppelten optischen Empfänger (2), teilweise an einen ersten Eingang der Entscheidungsschaltung und teilweise an das Low-Pass-Filter (4) angeschlossen ist, dessen Ausgangssignal teilweise an einen zweiten Eingang der Entscheidungsschaltung und teilweise an den Sendelaser (7) angeschlossen ist,
eine langsame automatische Verstärkungsregelungsschaltung (AGC-Schaltung) (6), durch die das Ausgangssignal des Low-Pass-Filters (4) an den Sendelaser (7) angeschlossen ist,
eine erste und eine zweite Speichereinrichtung,
einen Unterbrechungsdetektor (3), an den das Ausgangssignal von dem gleichstromgekoppelten optischen Empfänger (2) angeschlossen ist und der auf das Feststellen einer optischen Unterbrechung hin das Low-Pass-Filter (4) derart beeinflußt, daß sein Ausgangssignal als analoger Wert in der ersten Speichereinrichtung gespeichert wird, sowie den Sendelaser (7) durch Umleitung des Laserstroms derart beeinflußt, daß kein Strom durch den Sendelaser fließt und der analoge Wert der Regelschleife des Sendelasers als analoger Wert in der zweiten Speichereinrichtung gespeichert wird, und
Mittel, die dazu vorgesehen sind, auf das Enden der Unterbrechung hin den Betrieb sowohl des Sendelasers (7) als auch des Low-Pass-Filters (4) auf der Basis ihrer vorher gespeicherten analogen Werte fortzusetzen und gleichzeitig die Umleitung des Laserstroms zu beenden.

3. Vorrichtung nach Anspruch 2, **dadurch gekennzeichnet**, daß der Unterbrechungsdetektor (3) eine bestimmte festgelegte Unterbrechungsfeststellungsverzögerung aufweist.

4. Vorrichtung nach Anspruch 2, **dadurch gekennzeichnet**, daß der Unterbrechungsdetektor (3) eine durch den Benutzer einstellbare Verzögerung aufweist.

5. Vorrichtung nach Anspruch 3 oder 4, **dadurch gekennzeichnet**, daß das Low-Pass-Filter (4) ein konventionelles einpoliges RC-Filter mit einem analogen Schalter (16) in Reihe mit einem Widerstand (14) und einem Hochimpedanzverstärker (18), der das Filter puffert, ist.

6. Vorrichtung nach Anspruch 5, **dadurch gekennzeichnet**, daß die Regelschleife des Sendelasers (7) eine vom Benutzer einstellbare Bandbreite aufweist.

7. Vorrichtung nach Anspruch 6, **dadurch gekennzeichnet**, daß der Sendelaser (7) einen Integrierer (25) aufweist, der aus einem Verstärker (30), einem Operationsverstärker (34) mit einer Kapazität (33) zwischen dem negativen Eingang und dem Ausgang, und einem Widerstand (32) besteht, der in Reihe mit einem analogen Schalter (31) an den negativen Eingang angeschlossen ist, wobei der positive Eingang an eine Referenzspannung angeschlossen ist.

## Revendications

1. Méthode pour la conversion d'un signal de données optique non cohérent venant d'une fibre multimode (1), qui peut contenir, en dehors des signaux de données normaux, des interruptions et un signal de basse fréquence superposé, en un signal correspondant retransmis dans une fibre monomode (8) au moyen d'un transmetteur à laser (7),
caractérisée par les étapes de :
fourniture d'une première portion de signal électrique d'un récepteur optique couplé en courant continu (2), en partie à une première entrée d'un circuit de décision sous la forme d'un comparateur (5) dont le signal de sortie module le transmetteur à laser (7), et en partie à un filtre passe-bas (4), une première portion du signal de sortie du filtre passe-bas étant appliquée à une deuxième entrée du comparateur (5) ;
fourniture d'une deuxième portion de signal du filtre passe-bas (4) au transmetteur à laser (7) par l'intermédiaire d'un circuit lent à commande automatique de gain (6) ;
fourniture d'une deuxième portion de signal électrique du récepteur optique couplé en courant continu (2) à un détecteur d'interruption (3) par lequel, lors de la détection d'une interruption optique, le filtre passe-bas (4) est influencé de sorte que son signal de sortie est stocké dans un dispositif de mémoire comme valeur analogique, le transmetteur à laser (7) est influencé par dérivation du courant de laser de sorte que le courant ne traverse pas le transmetteur à laser et qu'une valeur analogiquedans une boucle de commande du transmetteur à laser est stockée, et de cette façon, à la fin de l'interruption, le transmetteur à laser (7) et le filtre passe-bas (4) continuent tous deux à fonctionner comme avant sur la base de leurs valeurs analogiques précédemment stockées, en même temps que la dérivation du courant de laser cesse.

2. Dispositif pour la conversion d'un signal de données optiques non cohérent d'une fibre multimode (1), qui contient, en dehors des signaux de données normaux, des interruptions et un signal de basse fréquence superposé, en un signal correspondant retransmis dans une fibre monomode (8) au moyen d'un transmetteur à laser (7) ;
caractérisé en ce qu'il comprend :
un récepteur optique couplé en courant continu (2) ;
un filtre passe-bas (4) ;
un circuit de décision sous la forme d'un comparateur (5) ayant une sortie qui module le transmetteur à laser (7), de sorte qu'un signal électrique venant du récepteur optique couplé en courant continu (2) est connecté en partie à une première entrée du circuit de décision et en partie au filtre passe-bas (4) dont le signal de sortie est connecté en partie à une deuxième entrée du circuit de décision et connecté en partie au transmetteur à laser (7) ;
un circuit lent de commande automatique de gain (6) par l'intermédiaire duquel le signal de sortie du filtre passe-bas (4) est connecté au transmetteur à laser (7) ;
un premier et un deuxième dispositifs de mémoire ;
un détecteur d'interruption (3) auquel le signal de sortie du récepteur optique couplé en courant continu (2) est connecté et qui influence le filtre passe-bas (4),lors de la détection d'une interruption optique, de sorte que son signal de sortie est stocké dans le premier dispositif de mémoire comme une valeur analogique, et qui influence le transmetteur à laser (7) par dérivation du courant de laser d'une manière telle que le courant ne traverse pas le transmetteur à laser et la valeur analogique de la boucle de commande du transmetteur à laser est stockée dans le deuxième dispositif de mémoire comme une valeur analogique ; et
des moyens prévus pour poursuivre, à la fin de l'interruption, le fonctionnement à la fois du transmetteur à laser (7) et du filtre passe-bas (4) sur la base de leurs valeurs analogiques précédemment stockées, et pour arrêter en même temps la dérivation du courant de laser (21).

3. Dispositif suivant la revendication 2, caractérisé en ce que le détecteur d'interruption (3) comporte un retard de détection d'interruption donné prédéterminé.

4. Dispositif suivant la revendication 2, caractérisé en ce que le détecteur d'interruption (3) comporte un retard réglable par l'utilisateur.

5. Dispositif suivant la revendication 3 ou 4, caractérisé en ce que le filtre passe-bas (4) est un filtre RC unipolaire usuel ayant un commutateur analogique (16) en série avec une résistance (14) et un amplificateur de haute impédance (18) pour tamponner le filtre.

6. Dispositif suivant la revendication 5, caractérisé en ce que la boucle de commande du transmetteur à laser (7) a une largeur de bande réglable par l'utilisateur.

7. Dispositif suivant la revendication 6, caractérisé en ce que le transmetteur à laser (7) comprend un intégrateur (25) constitué d'un amplificateur (30), d'un amplificateur opérationnel (34) ayant un condensateur (33) branché entre l'entrée négative et la sortie et d'une résistance (32) connectée en série avec un commutateur analogique (31) à l'entrée négative, l'entrée positive étant connectée à une tension de référence.
